# EUROPEAN PATENT APPLICATION

(11) **EP 1 936 897 A1**
(43) Date of publication of application: **25.06.2008**
(21) Application number: 06292037.6
(22) Date of filing: 21.12.2006
(51) Int. Cl.: H04L 27/00

(54) **Transmission of signalling information in an OFDM communication system**

(71) Applicant: General Instrument Corporation, a Corporation of the State of Delaware, Horsham, Pennsylvania 19044 (US)
(72) Inventor: Labbe, Patrick, Antony, (Haut de Seine) 92160 (FR); De Courville, Marc Bernard, Paris 75014 (FR); Mazet, Laurent S., Paris IDF 75014 (FR); Muck, Markus D., Paris, Ile de France 75013 (FR); Rouquette-Leveil, Stephanie, Massy 91300 (FR)
(74) Representative: Cross, Rupert Edward Blount

(57) **Abstract**

An OFDM receiver (300) is provided. The receiver includes a front end processing unit (301,303) for transforming a wireless signal to OFDM frames and a symbol extractor (305) for extracting OFDM symbols from the OFDM frames. The symbol extractor distinguishes between BPSK user data symbols and QPSK signal symbols based on statistical properties of the OFDM symbols and geometrical properties of a constellation cloud arising from the OFDM symbols. A symbol processor (307,309) is coupled to the symbol extractor to receive OFDM symbols from the symbol extractor. A decoder (311) is coupled to the symbol extractor to receive OFDM user data symbols from the symbol extractor and to decode the OFDM user data symbols using the OFDM symbols.

## Description

### Field of the Invention

The invention relates to communication of signalling information in an OFDM communication system and in particular to communication of signalling information related to physical layer characteristics in an IEEE 802.11 communication system.

### Background of the Invention

In recent years, wireless data communication in domestic and enterprise environments have become increasingly commonplace and an increasing number of wireless communication systems have been designed and deployed. In particular, the use of wireless networking has become prevalent and wireless network standards such as IEEE 802.11 a/b/g have become commonplace.

The requirement for increasing data rates, communication capacity and quality of services has led to continued research and new techniques and standards being developed for wireless networking. One such standard is the IEEE 802.11n standard which is currently under development. IEEE 802.11n is expected to operate in the 2.4GHz or 5GHz frequency spectrum and promises data rates of around 100Mbps and above on top of the MAC layer. IEEE 802.11n will use many techniques which are similar to the earlier developed IEEE 802.11a and IEEE 802.11g standards. The standard is to a large extent compatible with many of the characteristics of the earlier standards thereby allowing reuse of techniques and circuitry developed for these. For example, as in the previous standards IEEE 802.11a/b/g, IEEE 802.11n will use Orthogonal Frequency Division Multiplex (OFDM) modulation for transmission over the air interface.

Furthermore, in order to improve efficiency and to achieve the high data rates, IEEE 802.11n is planned to introduce a number of advanced techniques. For example, IEEE 802.11n communication is expected to be typically based on a plurality of transmit and receive antennas. Furthermore, rather than merely providing diversity from spatially separated transmit antennas, IEEE 802.11n will utilise transmitters having at least partially separate transmit circuitry for each antenna thus allowing different sub-signals to be transmitted from each of the antennas. The receivers may receive signals from a plurality of receive antennas and may perform a joint detection taking into account the number and individual characteristics associated with each of the plurality of transmit antennas and receive antennas. Specifically, IEEE 802.11n has seen the likely introduction of a Multiple-Transmit-Multiple-Receive (MTMR) antenna concept which exploits Multiple-Input-Multiple-Output (MIMO) channel properties to improve performance and throughput.

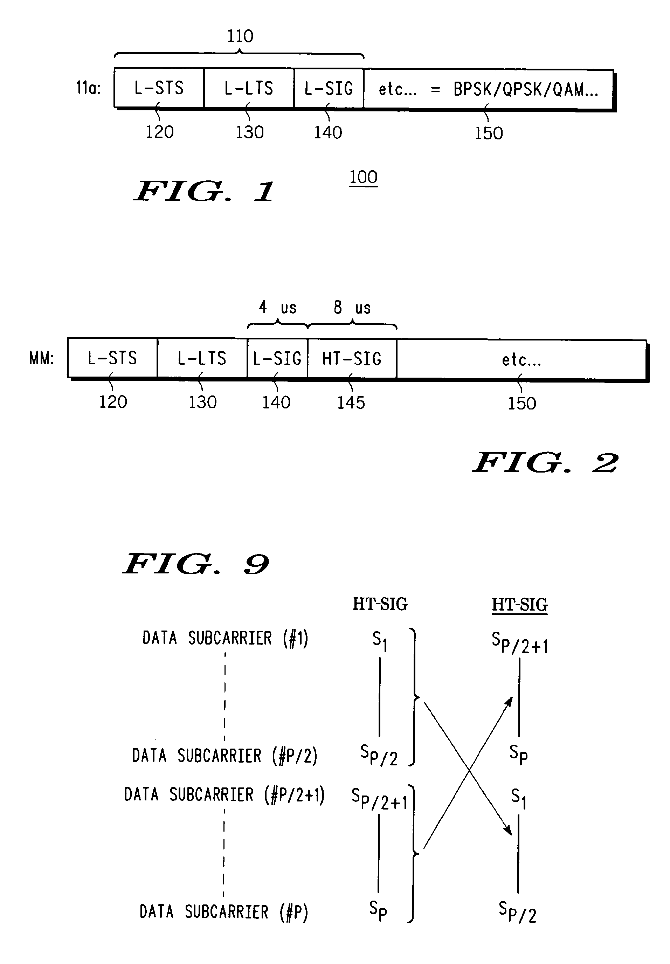

In order to enable or facilitate reception, the standards of IEEE 802.11 a/b/g as well as the 802.11n proposals prescribe that all data packet are preceded by a physical layer preamble which comprises known data or training symbols that facilitates receiver gain setting, synchronization and channel estimation. In addition, a dedicated OFDM symbol is included which conveys physical layer signaling required for the decoding of the data packet. This information includes, among others, information of the modulation scheme, coding rate and packet length for the data packet. This information is located in the SIGNAL (SIG) field. Since IEEE 802.11n receivers require information relating to multiple antennas, the signaling field has been enhanced for IEEE 802.11n and is generally referred to as SIG-N. The SIG-N field is communicated as QPSK symbols in the subcarriers of the dedicated SIG-N field OFDM symbol. SIG-N mapping (QPSK) has been defined in the context of a proposal (Cenk Kose, Bruce Edwards, "WWiSE Proposal: High throughput extension to the 802.11 Standard", IEEE document number 11-05-0149-02-000n) to IEEE802.11n. The physical layer preamble will be described in more detail with reference to FIG. 1.

FIG. illustrates a conventional frame format 100 in accordance with the IEEE 802.11 a/g standards. The frame format 100 comprises a physical layer preamble 110 and a data field 150. The preamble 110 includes a Short Preamble 120 that comprises ten short training symbols (STS). These are used to detect the presence of an incoming signal and to perform initial estimations of, for example, carrier frequency offset. Thereafter, there is a Long Preamble 130 comprising two Long Training Symbols (LTS). These OFDM training symbols are used to perform channel estimation (i.e., an estimate of the channel transfer function from the transmitting antenna to each receiving antenna). Channel estimation is employed to determine the effects that the transmission environment has on the transmitted data signals. The channel estimation procedure utilizes the long training signals, which have a known magnitude and phase, to compensate for signal changes due to the transmission environment. The long training signals can be analyzed to determine the effects of the environment on the transmitted signal and this information utilized to adjust the data signals appropriately. The preamble 110 also includes SIGNAL (SIG) field 140. The information in the SIGNAL field 140 is needed to transmit general frame format parameters, such as packet length and data rate and the details of the modulation format that is used. The Short Preamble, Long Preamble and Signal field comprise a legacy header 110. The OFDM symbols carrying the user data are located in the DATA field 150 that follows the SIGNAL field.

FIG. 2 shows a mixed-mode frame format in which 802.11 a/b/g and 802.11 n devices coexist. The frame format includes the legacy STS, LTS and SIG fields. In addition a second SIG field 145, denoted the High-Throughput SIG field (HT-SIG), is provided. The legacy SIG field 140 and the HT-SIG field 145 collectively define the SIG-N field discussed above.

In a mixed-mode environment the receiver must be able to identify as soon in the frame as possible whether a pure legacy frame format is being received or whether an 802.11n frame format is being received. Since the legacy STS, LTS and SIG fields are identical in the legacy 802.11 a/b/g frame format and the 802.11n frame format, there are no bits available in the legacy SIG field 140 to communicate whether a legacy or mixed-mode frame is being received. Ideally, the receiver should not need to decode the HT-SIG field 145. Rather, the distinction between a legacy and mixed mode frame format should be performed using an autodetection technique that is preferably based on the specific modulation format used for the HT-SIG field. A number of different autodetection techniques have been proposed to make this distinction.

In one proposal, the HT-SIG FIELD 145 uses a qBPSK modulation format, which is a BPSK constellation rotated by 90 degrees. This proposal is discussed in more detail in the document Working Group of the 802 Committee, "IEEE P802.11n^{™}/D1.05 Draft Amendment," New York, 2006, referred to herein an the "802 Working Group." The distinction between legacy and mixed-mode formats is determined by indicating in the L-SIG field 140 that BPSK data signals are following. However, if qBPSK modulated signals are received instead, the legacy and 802.11n modes can be distinguished by distinguishing between BPSK modulation and qBPSK modulation. One problem with this proposal is that the HT-SIG field can become a bottleneck for high-throughput and long range transmission.

In another proposal, discussed in PCT/US06/16567 filed on May 1, 2006, the HT-SIG field 145 is transmitted using QPSK instead of qBPSK. In this case, after receiving the L-SIG field 140, it is necessary to distinguish between an 802.11a/b/g legacy frame that includes user data modulated in accordance with a BPSK format and an 802.11n frame that includes a HT-SIG field that contains QPSK modulated signal symbols. Details concerning the manner in which the HT-SIG field symbols are transmitted may be found in the aforementioned patent application.

Accordingly, if a QPSK modulation format is used for symbols in the HT-SIG field, it would be desirable to provide a method and apparatus for distinguishing between BPSK modulated symbols and QPSK modulated symbols.

### Brief Description of the Drawings

FIG.1 illustrates a conventional frame format in accordance with the IEEE 802.11a/g standards.

FIG. 2 shows a mixed-mode frame format in which 802.11a/b/g and 802.11n devices coexist.

FIGs. 3 and 4 are graphs in which the x and y axes represent Vr and Vi, respectively.

FIG. 5 is flowchart showing one example of a process that may be used to distinguish between a QPSK symbol and a BPSK symbol.

FIG 6a shows simulation results for the probability of a misdetection and FIG 6b shows simulation results for the probability of a false alarm when two OFDM symbols are employed.

FIG 7a shows simulation results for the probability of a misdetection and FIG 7b shows simulation results for the probability of a false alarm when one OFDM symbol is employed.

FIG. 8 shows one example of an OFDM transmitter in which the HT-SIG field is transmitted using a QPSK modulation format.

FIG. 9 illustrates a specific example of signal symbol allocation to OFDM signalling symbols.

FIG. 10 illustrates one example of an OFDM receiver.

### Detailed Description

The techniques described herein can be employed on a variety of different communication methods and devices utilizing Orthogonal Frequency Division Multiplexing (OFDM). In general, OFDM is a block-oriented modulation scheme that maps a number of data constellation points onto a number of orthogonal carriers separated in frequency by BW/N, where BW is the bandwidth of the OFDM symbol and N is the number of tones in the OFDM symbol. OFDM is a technique by which data is transmitted at a high rate by modulating several low bit rate carriers in parallel rather than one single high bit rate carrier. OFDM is particularly useful in the context of Wireless Local Area Network (WLAN), Digital Video Broadcasting (DVB), High Definition Television (HDTV) as well as for Asymmetric Digital Subscriber Lines (ADSL) systems. OFDM can also be useful in satellite television systems, cable television, video-on-demand, interactive services, mobile communication devices, voice services and Internet services. For purposes of illustration, the channel estimation techniques will be described in the context of the IEEE 802.11 standards, (e.g., 802.11n), which employ OFDM. Of course, the techniques described herein are more generally applicable to any suitable wireless transmission techniques that employ OFDM.

A technique is presented herein for distinguishing between BPSK and QPSK modulated signals. In this way an OFDM receiver using this technique can automatically distinguish between a legacy frame format and an 802.11n format in which the signal symbols in the HT-SIG field is transmitted using QPSK modulation. Detection between these modulation formats is made difficult because of the limited number of observations that are available. Only 1 or 2 OFDM symbols are detected, which correspond to 52 or 106 observations, respectively. This difficulty is further exacerbated because the symbols often need to be detected at very low SNR levels (e.g., 0dB to 5dB).

One way to distinguish between a BPSK modulation constellation and a QPSK modulation constellation involves an examination of the statistical properties of the received symbols. For instance, the variance of the imaginary part of a BPSK signal only depends of the noise variance, but the variance of the real part of the BPSK signal is the sum of the signal variance (which is assumed to be equal to 1) and the noise variance. On the other hand, for a QPSK signal, the variance of the real part of the signal and the variance of the imaginary part of the signal are equal to half of the signal variance plus the noise variance. Accordingly, based on these different statistical characteristics, one detection algorithm that can be used to distinguish the BPSK and the QPSK modulation constellations is:
If (Vi - Vn)/(Vr - Vn) > ½ then it is a QPSK signal, otherwise it is a BPSK signal,
Where Vr is the variance of the real part of the equalized signal, Vi the variance of the real part of the equalized signal and Vn the noise variance (real or imaginary part).

However, at low SNRs the estimation bias of Vn can be a problem compared to Vr and Vi for low SNR. The faulty effect of this bias can be reduced by averaging Vr with different estimators or by weighing the estimation. In any case, regardless of how the bias is reduced, it has been found that the optimal point has a 0.5dB loss when two OFDM symbols are detected.

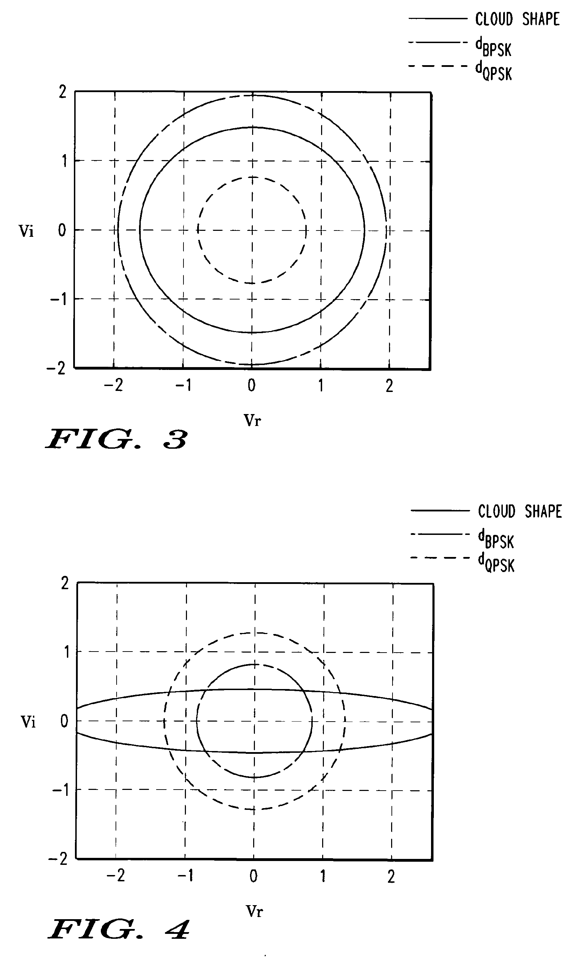

Another approach that may be used to distinguish between a BPSK modulation constellation and a QPSK modulation constellation involves an analysis of the geometrical properties of the cloud that is defined on the constellation diagram by all the observed points. To improve the accuracy even further, a combination of both the statistical approach and an analysis of the geometry of the cloud may be advantageously used to distinguish between a BPSK modulation constellation and a QPSK modulation. In this approach, the values of Vr and Vi are first calculated. This quantifies the distortion of the cloud that is formed by the observed points so that no noticeable differences should be observed if a QPSK symbol is considered. If Vi<Vr then a BPSK symbol should be deemed to be present. This approach will be illustrated in connection with FIGs. 3 and 4.

FIGs. 3 and 4 are graphs in which the x and y axes represent Vr and Vi, respectively. FIG. 3 shows the results for a QPSK symbol and FIG. 4 shows the results for a BPSK symbol. The graphs each show two circles defined by d_{BPSK} and d_{QPSK}. As is well known, d_{BPSK} defines the Euclidean distance between the experimental points of the received symbol and the closest point on the BPSK constellation. Similarly, D_{QPSK} defines the Euclidean distance between the experimental points of the received symbol and the closest point on the QPSK constellation. The distances d_{BPSK} and d_{QPSK} are also well known as the metrics associated with the maximum likelihood criterion used to recover an estimate of the transmitted signal matrix based on the received matrix. Also shown on FIGs. 3 and 4 are ellipses that represent the cloud shape for a QPSK constellation and a BPSK constellation, respectively. The cloud shape is defined by the metrics derived from the cloud statistics. That is, the cloud shape is defined by x²/a² + y²/b² = 1. If the ellipse associated with the cloud shape does not cross either of the circles defined by D_{BPSK} and d_{QPSK}, the symbol is a QPSK symbol. On the other hand, if the ellipse associated with the cloud shape does in fact cross either of the circles defined by D_{BPSK} and D_{QPSK}, the symbol is a BPSK symbol. In this case, since the ellipse crosses the circles D_{BPSK} and D_{QPSK} on the BPSK graph of FIG. 4, the symbol is a BPSK symbol.

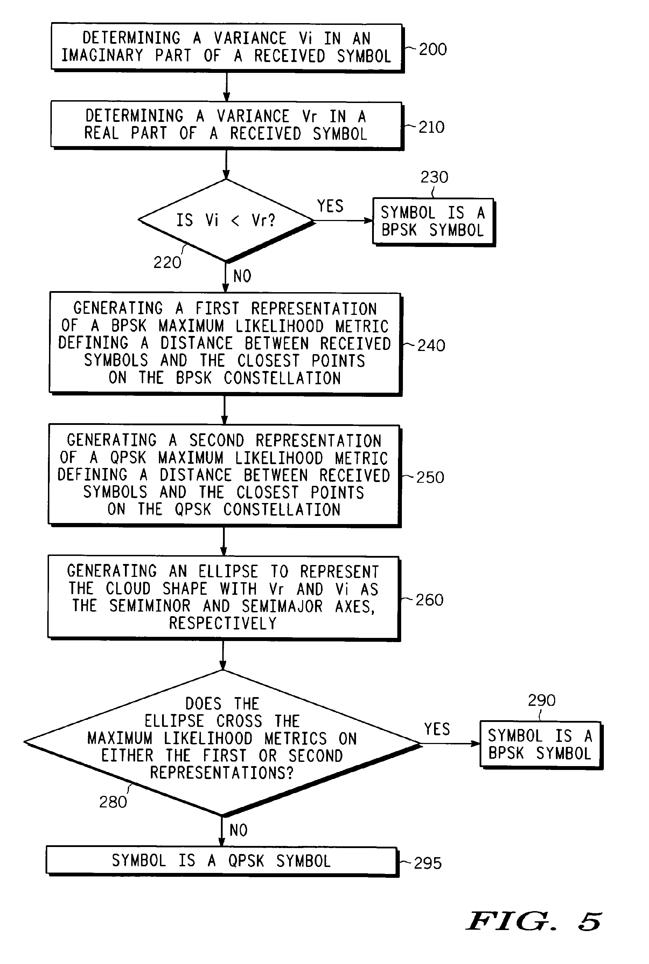

FIG. 5 is flowchart showing one example of a process that may be used to distinguish between a QPSK symbol and a BPSK symbol for the purpose of determining, for example, whether a mixed-mode or a legacy 802.11 frame format is received. The process begins in step 200 by determining a variance Vi in the imaginary part of a received OFDM symbol and in step 210 by determining a variance Vr in the real part of the received OFDM symbol. Next, in decision step 220 the magnitude of Vi is compared to the magnitude of Vr. If Vi < Vr then in step 230 the symbol is deemed to be a BPSK symbol and the process terminates. On the other hand, if Vi > Vr, then the process continues in step 240, where a first representation of a BPSK maximum likelihood metric is generated. The BPSK maximum likelihood metric defines a distance between the received symbols and the closest points on the BPSK constellation. Similarly, in step 250, a second representation of a QPSK maximum likelihood metric is generated. The QPSK maximum likelihood metric defines a distance between the received symbols and the closest points on the QPSK constellation. In step 260, to represent the cloud shape, an ellipse is generated with Vr and Vi as semiminor and semimajor axis. If in decision step 280 it is determined that the ellipse crosses the maximum likelihood metrics on either the first or second representations, then the symbol is deemed to be a BPSK symbol in step 290. On the other hand, if in decision step 280 it is determined that the ellipse does not cross the maximum likelihood metrics on either the first or second representations, then the symbol is deemed to be a QPSK symbol in step 295.

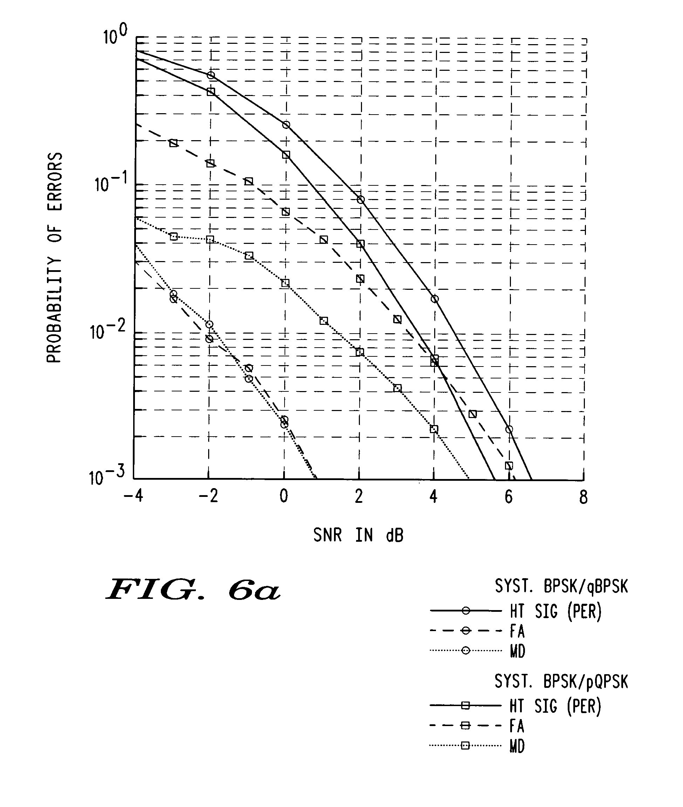

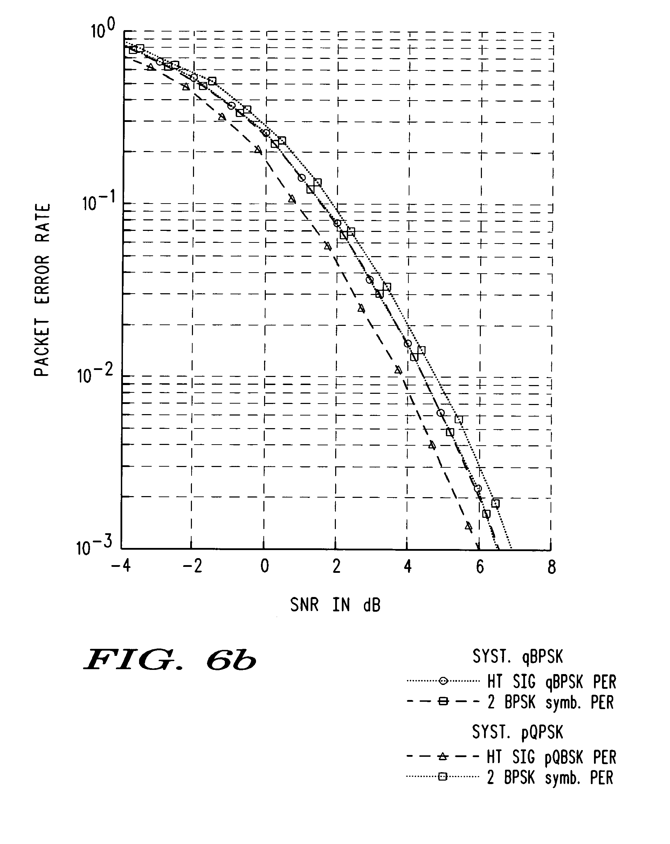

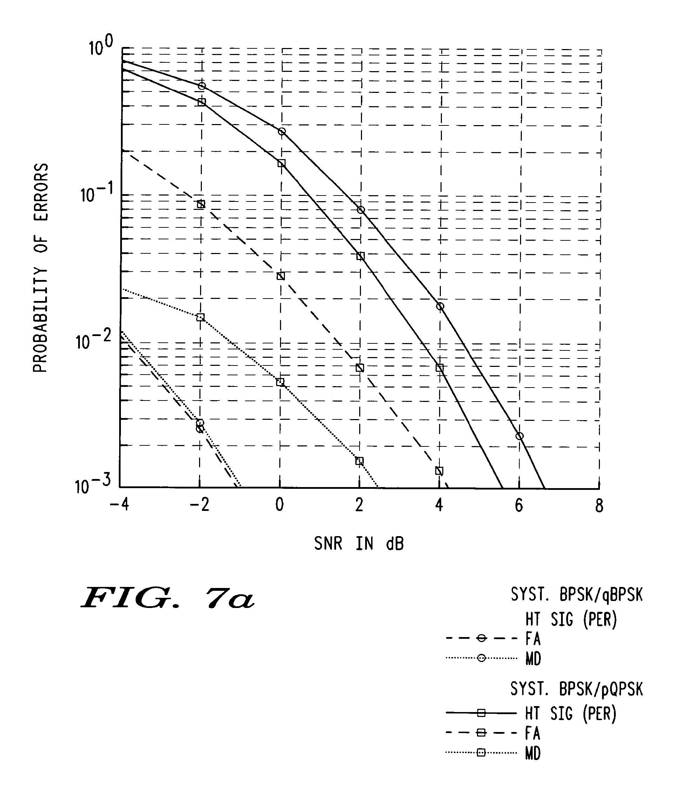

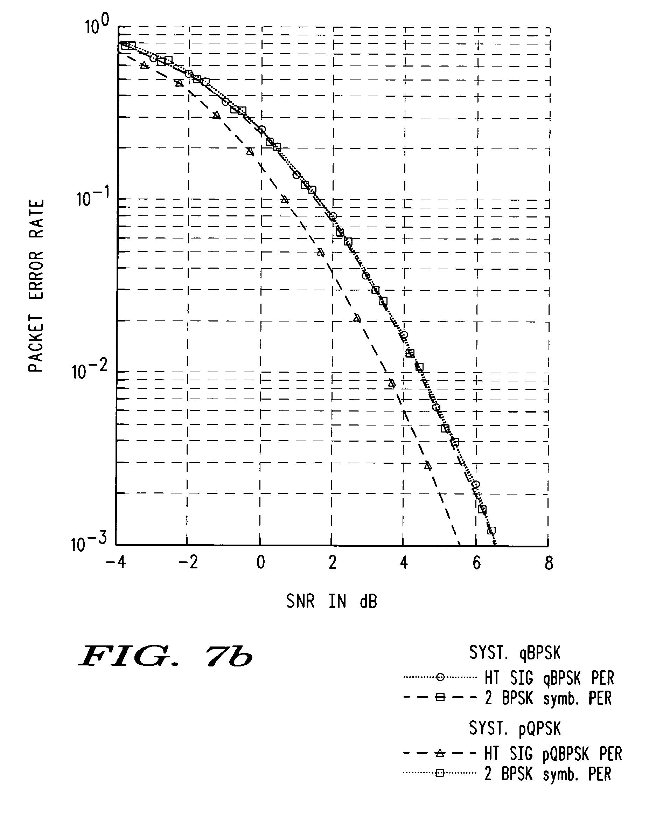

FIGs. 6 and 7, which show the probability of errors (PER) vs. the signal-to-noise ratio (SNR), are simulations comparing the global performance and reliability of both discrimination techniques discussed above for distinguishing between legacy and mixed-mode formats. FIG 6a shows results for the probability of a misdetection (i.e., no information is available concerning whether a mixed mode or legacy mode is in operation and a QPSK or qBPSK symbol has been transmitted). FIG 6b shows results for the probability of a false alarm (i.e., information is available concerning whether a mixed mode or legacy mode is in operation and no QPSK or qBPSK symbols have been transmitted). In both FIGs. 6a and 6b the data points represented by circles are for an arrangement distinguishing between BPSK and qBPSK symbols (i.e., the 802 Working Group Proposal) and the data points represented by squares are for an arrangement distinguishing between BPSK and QPSK (i.e., the proposal shown in PCT/US06/16567)

FIG. 6a shows the probability of misdetection and the probability of a false alarm for the two arrangements distinguishing between BPSK and QPSK symbols. Two different systems are depicted: one for an HT-SIG using a qBPSK modulation format and one for an HT-SIG using a pQPSK modulation format. In both cases the false alarm (FA) and misdetection (MD) probabilities are derived using a classical BPSK symbol. FIG. 6b represents the final performance of the HT-SIG. For both systems the FA and MD probabilities are compliant with the overall performance of the HT-SIG PER. These simulations, obtained for a typical office environment (a TGnD channel), demonstrate that the detection of a qBPSK symbol is far better than the detection of a QPSK symbol, but in both cases they remain compatible with the performance of their corresponding SIG fields. The curves also indicate that the initial performance curve (i.e., the HT-SIG curves when FA or MD are not taken into account) does not suffer any additional penalty, and thus the HT-SIG format employed in Patent Appl. No. [CML02483] remains more reliable than the HT-SIG format employed by the 802 Working Group.

FIGs. 7a and 7b present the same results as in FIGs. 6a and 6b except that only one OFDM symbol is detected instead of two OFDM symbols. The figures demonstrate that when the performance (in terms of PER) of each HT-SIG is summed with the FA and MD probability ,there is almost no additional penalty to the overall system when using the techniques described herein for detecting the use of a QPSK modulation format in the HT-SIG field. In particular, FIGs. 7a and 7b indicate that the detection scheme shown in Patent Appl. No. [CML02483] suffers from a penalty of 0.2dB on the global PER but nevertheless remains better by 0.7dB.

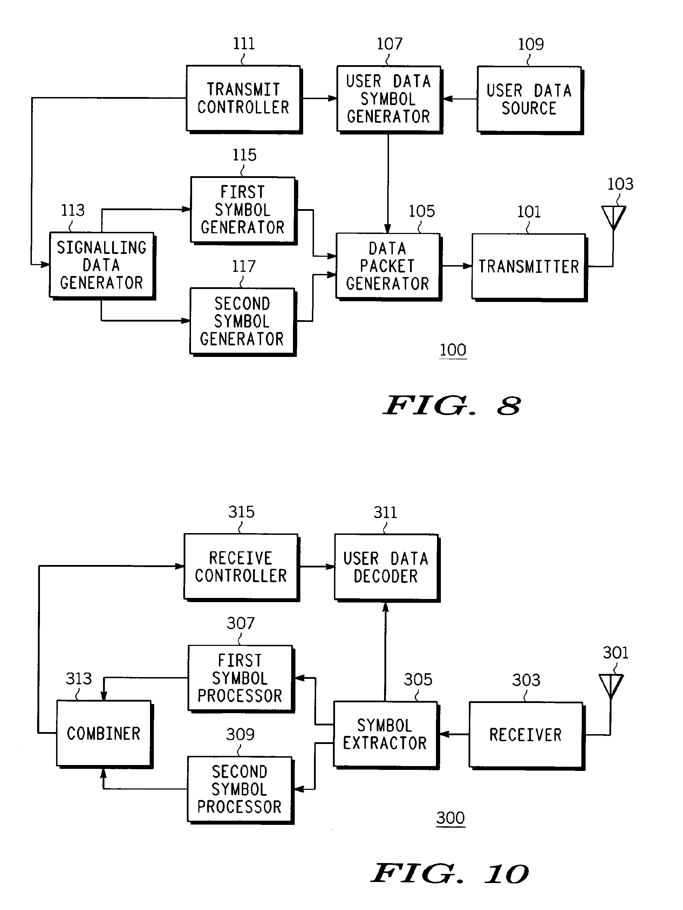

FIG. 8 shows one example of an OFDM transmitter in which the HT-SIG field 145 is transmitted using a QPSK modulation format. By using QPSK constellations the number of ODFM signals that are required is reduced to a single symbol (in contrast, qBPSK constellations require two bits per carrier instead of one bit). In this arrangement the second available symbol time is used to repeat the encoded OFDM symbol in combination with a carrier permutation. This arrangement allows the frequency diversity to be increased, thereby preventing the HT-SIG from becoming a bottle-neck for high-throughput and long-range transmission, which, as previously mentioned, is a problem with the proposal discussed by the 8-2 Working Group in "IEEE P802.11n^{TM}/D1.05 Draft Amendment."

As shown in FIG. 8, the OFDM transmitter 100 comprises a transmitter 101 which is arranged to transmit OFDM signals in accordance with the Technical Specifications for the particular communication system in which the transmitter is employed (e.g., IEEE 802.11). The transmitter 101 is further coupled to a data packet generator 105 which generates data packets that are fed to the transmitter 101 for transmission. Specifically, the data packet generator 105 generates a data packet comprising a number of signalling OFDM symbols and a number of user data symbols. The data packet generator 105 is coupled to a user data symbol generator 107 which is further coupled to a user data source 109. In the specific example, the user data source 109 is an internal source but it will be appreciated that data to be transmitted may be received from any physical, logical or functional external or internal entity.

The user data symbol generator 107 is further coupled to a transmit controller 111 which controls the transmission characteristics of the transmitted signals. In particular, in accordance with the IEEE 802.11 specifications, different characteristics and modes may be used for transmission. Specifically, different forward error correcting schemes, modulation schemes and transmission modes may be used for transmission of data packets and the transmit controller 111 is arranged to select the desired parameters and feed these to the user data symbol generator 107.

The transmit controller 111 is furthermore coupled to a signalling data generator 113. The signalling data generator 113 generates a set of signal symbols which are indicative of physical layer characteristics of data transmissions from the OFDM transmitter 100. In particular, the signalling data generator 113 generates a set of signal symbols which define the transmit parameters and characteristics that have been applied to the user data by the user data symbol generator 107. Thus, the set of signal symbols may identify the forward error correcting coding and symbol constellations used and may further include information of other transmission parameters affecting physical layer communication such as e.g. the duration of the data packets. In the specific example, the signalling data generator 113 generates a SIG or SIG-N field in accordance with the specifications for IEEE 802.11 communication systems.

The signalling data generator 113 is coupled to a first symbol generator 115 and a second symbol generator 117 which are both fed the set of signal symbols from the signalling data generator 113. In the example of FIG. 1, the signalling data generator 113 generates the set of signal symbols as QPSK symbols ready for transmission in individual OFDM subcarriers.

The first symbol generator 115 generates a first OFDM signalling symbol by allocating the received signal symbols to subcarriers of the first OFDM signalling symbol. Specifically, the first symbol generator 115 may simply select a subcarrier for each signal symbol of the set of signal symbols in accordance with a predetermined rule or table. For example, a single signal symbol may be used to identify the forward error coding rate applied, and it may be predefined that this symbol is transmitted in, say, subcarrier number N.

Similarly, the second symbol generator 117 generates a second OFDM signalling symbol by allocating the received signal symbols to subcarriers of the second OFDM signalling symbol. Likewise, the second symbol generator 117 may simply select a subcarrier for each signal symbol of the set of signal symbols in accordance with a predetermined rule or table. However, the allocation of signal symbols is different for the first symbol generator 115 and the second symbol generator 117 resulting in at least some of the signal symbols of the set of signal symbols being allocated to different subcarriers in the first and the second OFDM signalling symbol.

The first symbol generator 115 and the second symbol generator 117 are further coupled to the data packet generator 105 which is fed the first and second OFDM symbols. The data packet generator 105 then proceeds to generate a data packet comprising the first and second OFDM symbols as well as the user data OFDM symbols received from the user data symbol generator 107. In the specific example of an IEEE 802.11 transmitter, the data packet generator 105 furthermore inserts a preamble of known data to facilitate reception and in particular to facilitate initial gain setting, synchronisation and channel estimation by the receiver.

The generated data packet is fed to the transmitter 101 which proceeds to transmit the OFDM symbols. In particular the transmitter 101 performs an inverse Discrete Fourier Transform (iDFT) on the OFDM symbols, upconverts and amplifies the resulting signal etc as will be well known to the person skilled in the art.

Thus, in the transmitter of FIG. 8, the physical layer signalling symbols are transmitted twice using different OFDM signalling symbols. Furthermore, the allocation of data to the different subcarriers is varied between the two different signalling symbols thereby obtaining a reliability improvement which exceeds the 3dB gain which is achievable by conventional retransmission. Specifically, the approach may allow for data packets to be transmitted where the effective range for the signalling information is extended substantially. In particular, in frequency selective fast fading channels, which are typical for many applications of IEEE 802.11 systems, a significant improvement of typically 30 to 35% can be achieved

It will be appreciated that any suitable mechanism, algorithm or criterion for allocating signal symbols to subcarriers may be used as long as the allocation is not identical for the first and second OFDM signalling symbols.

In the specific example of FIG. 8, the first symbol generator 115 allocates a first subset of the signal symbols to a first subset of subcarriers of the first OFDM signalling symbol whereas the second symbol generator 117 allocates the same signal symbols to a different subset of subcarriers. Furthermore, a low complexity implementation may be achieved by the second symbol generator 117 allocating the signal symbols to subcarriers which have a predetermined offset with respect to the allocation by the first symbol generator 115.

FIG. 9 illustrates a specific example of signal symbol allocation to OFDM signalling symbols in accordance with some embodiments of the invention. In the example, a number P of subcarriers are used in each OFDM symbol and all available subcarriers of the OFDM signaling symbols are used for transmitting the SIG-N field. In accordance with proposals for the IEEE 802.11 technical specifications P=54 in a 20MHz bandwidth and P=108 in a 40MHz bandwidth.

In the example, the signal symbols that are successively sent on the first P/2 data subcarriers for the first OFDM signaling symbol are allocated to the data subcarriers #P/2+1 to #P/2 for the second OFDM signaling symbol. Similarly the symbols that are transmitted on the data subcarriers #P/2+1 to #P for the first OFDM signaling symbol are transmitted on the first P/2 data subcarriers for the second OFDM signaling symbol.

FIG. 10 illustrates one example of an OFDM receiver 300 that may perform any of the aforementioned techniques for distinguishing between a legacy 802.11a/g frame format and an 802.11n frame format. The OFDM receiver 300 comprises an antenna 301 connected to a front end processing unit 303 which receives the signal from the OFDM transmitter 100 of FIG. 3. The front end processing unit 303 demodulates, amplifies, down-converts and generates the OFDM symbols by applying a Discrete Fourier Transform (DFT) as will be known to the person skilled in the art.

The front end processing unit 303 is coupled to a symbol extractor 305 which is further coupled to a first symbol processor 307, a second symbol processor 309 and a user data decoder 311. The symbol extractor 305 distinguishes between frame formats and extracts the different OFDM signaling symbols from the data packet and specifically forwards the first OFDM signaling symbol to the first symbol processor 307 and the second OFDM signaling symbol to the second symbol processor 309. In addition, the user data OFDM symbols are fed to the user data decoder 311.

The first symbol processor 307 processes the first OFDM signaling symbol and/or the second symbol processor 309 processes the second OFDM signaling symbol such that the corresponding signal symbols of the first set of signal symbols align in the two OFDM symbols. For example, the second symbol processor 309 may simply reorder the data of the second OFDM signaling symbol such that it is the same as the first OFDM signaling symbol.

The first symbol processor 307 and second symbol processor 309 are coupled to a combiner 313 which combines the data of the first and second OFDM signaling symbols.

In one embodiment, the combiner 313 simply performs a selection combining wherein the combiner 313 for each subcarrier selects the signal symbol value of either the first or the second OFDM signaling symbol. The combiner may for example select the signal symbol having the highest received signal value. In other embodiments, more advanced combining techniques may be applied and in particular Maximum Ratio Combining wherein each data value is weighted in accordance with a quality measure (such as a signal to noise ratio) before being added together to generate a combined data value.

The combiner 313 is coupled to a receive controller 315 which is fed the combined data values. Thus, in the specific example, the receive controller 315 receives the SIG-N field which reflects the transmission parameters used by the OFDM transmitter 100 for transmitting the user data.

The receive controller 315 is coupled to the user data decoder 311 and feeds the information of the applied physical layer transmission parameters to this. In response, the user data decoder 311 decodes the received OFDM user data symbols. For example, the user data decoder 311 proceeds to apply the appropriate forward error correcting decoding scheme and to decode the resulting data according to the symbol constellations defined by the SIG-N field.

In the above described examples of the transmitter 100 and receiver 300, a single transmit and receive antenna was used for the communication. However, in some applications (e.g., IEEE 802.11n applications) a plurality of transmit and/or receive antennas may be used. Moreover, receiver 300 may employ only a single symbol processor if the transmitted signal only employs a single set of signal symbols.

Although a specific architecture has been described in connection with FIGs. 8 and 10, including specific functional elements and relationships, it is contemplated that the systems and methods herein may be implemented in a variety of ways. For example, functional elements may be packaged together or individually, or may be implemented by fewer, more or different devices, and may be either integrated within other products, or adapted to work with other products externally. When one element is indicated as being responsive to another element, the elements may be directly or indirectly coupled.

The processes described above, including those shown in FIG. 5, may be implemented in a general, multi-purpose or single purpose processor. Such a processor will execute instructions, either at the assembly, compiled or machine-level, to perform that process. Those instructions can be written by one of ordinary skill in the art following the descriptions herein and stored or transmitted on a computer readable medium. The instructions may also be created using source code or any other known computer-aided design tool. A computer readable medium may be any medium capable of carrying those instructions and include a CD-ROM, DVD, magnetic or other optical disc, tape, silicon memory (e.g., removable, non-removable, volatile or non-volatile), packetized or non-packetized wireline or wireless transmission signals.

## Claims

1. A method for distinguishing between BPSK and QPSK modulated signals, comprising:
determining a variance Vi in an imaginary part of a received OFDM symbol;
determining a variance Vr in a real part of the received OFDM symbol;
generating a first representation of a BPSK maximum likelihood metric defining a distance between the received symbols and the closest points on a BPSK constellation;
generating a second representation of a QPSK maximum likelihood metric defining a distance between the received symbols and the closest points on a QPSK constellation;
generating an ellipse representing the cloud shape with Vr and Vi as semiminor and semimajor axes, respectively;
assessing if the ellipse crosses the maximum likelihood metrics on either the first or second representations.

2. The method of claim 1 wherein the received symbol is a BPSK symbol if the ellipse crosses the maximum likelihood metrics on either the first or second representations.

3. The method of claim 1 wherein the received symbol is a QPSK symbol if the ellipse does not cross the maximum likelihood metrics on either the first or second representations.

4. The method of claim 1 wherein the received symbol is a BPSK symbol if Vi <Vr.

5. The method of claim 1 wherein the ellipse is generated only if the Vi > Vr.

6. A method for identifying an OFDM frame format in which QPSK signal symbols are employed that are indicative of physical layer characteristics of data transmission, comprising:
determining a variance Vi in an imaginary part of a received OFDM symbol;
determining a variance Vr in a real part of the received OFDM symbol;
if Vi > Vr, generating a first representation of a BPSK maximum likelihood metric defining a distance between the received symbols and the closest points on a BPSK constellation;
if Vi > Vr, generating a second representation of a QPSK maximum likelihood metric defining a distance between the received symbols and the closest points on a QPSK constellation;
generating an ellipse representing the cloud shape with Vr and Vi as semiminor and semimajor axes, respectively; and
assessing if the ellipse crosses the maximum likelihood metrics on either the first or second representations.

7. The method of claim 6 wherein the OFDM frame is deemed to employ a QPSK signal symbol format indicative of physical layer characteristics of data transmission if the ellipse does not cross the maximum likelihood metrics on either the first or second representations.

8. The method of claim 6 wherein the received symbol is a BPSK symbol if the ellipse crosses the maximum likelihood metrics on either the first or second representations.

9. The method of claim 6 wherein the received symbol is a QPSK symbol if the ellipse does not cross the maximum likelihood metrics on either the first or second representations.

10. The method of claim 6 wherein the received symbol is a BPSK symbol if Vi <Vr.

11. The method of claim 6 wherein the ellipse is generated only if the Vi > Vr.

12. An OFDM receiver, comprising:
a front end processing unit for transforming a wireless signal to OFDM frames;
a symbol extractor for extracting OFDM symbols from the OFDM frames, said symbol extractor distinguishing between BPSK user data symbols and QPSK signal symbols based on statistical properties of the signal OFDM signal symbols and geometrical properties of a constellation cloud arising from the OFDM signal symbols;
a symbol processor coupled to the symbol extractor to receive OFDM signal symbols from the symbol extractor; and
a decoder coupled to the symbol extractor to receive OFDM user data symbols from the symbol extractor and to decode the OFDM user data symbols using the OFDM signal symbols.

13. The OFDM receiver of claim 12 wherein the symbol extractor is configured to:
determine a variance Vi in an imaginary part of a received OFDM symbol;
determine a variance Vr in a real part of the received OFDM symbol;
generate a first representation of a BPSK maximum likelihood metric defining a distance between the received symbols and the closest points on a BPSK constellation;
generate a second representation of a QPSK maximum likelihood metric defining a distance between the received symbols and the closest points on a QPSK constellation;
generate an ellipse representing the cloud shape with Vr and Vi as semiminor and semimajor axes, respectively; and
assess if the ellipse crosses the maximum likelihood metrics on either the first or second representations.

14. The OFDM receiver of claim 13 wherein the received symbol is a BPSK symbol if the ellipse crosses the maximum likelihood metrics on either the first or second representations.

15. The OFDM receiver of claim 13 wherein the received symbol is a QPSK symbol if the ellipse does not cross the maximum likelihood metrics on either the first or second representations.

16. The OFDM receiver of claim 13 wherein the received symbol is a BPSK symbol if Vi <Vr.

17. The OFDM receiver of claim 13 wherein the ellipse is generated only if the Vi > Vr.
